# EUROPEAN PATENT SPECIFICATION

(11) **EP 4 470 145 B1**
(45) Date of publication and mention of the grant of the patent: **25.11.2026**
(21) Application number: 23725427.1
(22) Date of filing: 26.04.2023
(51) Int. Cl.: H04L 5/00

(54) **PHYSICAL SIDELINK FEEDBACK CHANNEL SYMBOL DETERMINATION**
SYMBOLBESTIMMUNG EINES PHYSIKALISCHEN SIDELINK-FEEDBACKKANALS
DÉTERMINATION DE SYMBOLE DE CANAL DE RÉTROACTION DE LIAISON LATÉRALE PHYSIQUE

(30) Priority: 29.04.2022 US 202263336732 P
(43) Date of publication of application: 04.12.2024
(73) Proprietor: Lenovo (Singapore) Pte. Ltd., Singapore 556741 (SG)
(72) Inventor: GOLITSCHEK EDLER VON ELBWART, Alexander, 64285 Darmstadt (DE); GANESAN, Karthikeyan, 61476 Kronberg Im Taunus (DE); LÖHR, Joachim, 65203 Wiesbaden (DE); BASU MALLICK, Prateek, 63303 Dreieich (DE); NANGIA, Vijay, Woodridge, Illinois 60517 (US); KUCHIBHOTLA, Ravi, Chicago, Illinois 60680 (US)
(74) Representative: Marks & Clerk LLP
(86) International application number: PCT/IB2023/054263
(87) International publication number: WO 2023/209578

(56) References cited:
- WO-A1-2020/210333
- CN-A- 114 245 972
- US-A1- 2021 203 453
- US-A1- 2022 294 570

## Description

### TECHNICAL FIELD

The present disclosure relates to wireless communications, and more specifically to physical sidelink feedback channel (PSFCH).

US 2021/203453 A1 discloses a receiving a PSSCH scheduled by a PSCCH including sidelink control information from a transmitting terminal.

CN 114245972 A discloses receiving a higher layer signaling message including PSFCH configuration information from a base station; transmitting an SCI including resource allocation information of the data and configuration information of HARQ feedback for the data to the plurality of receiving terminals; transmitting data to the plurality of receiving terminals on the PSSCH indicated by the SCI; and receiving one sequence mapped to the HARQ response for the data from the plurality of receiving terminals on the PSFCH indicated by the PSFCH configuration information.

### BACKGROUND

A wireless communications system may include one or multiple network communication devices, such as base stations, which may be otherwise known as an eNodeB (eNB), a next-generation NodeB (gNB), core network functions (CNFs), or other suitable terminology. Each network communication device, such as a base station, may support wireless communications for one or multiple user communication devices, which may be otherwise known as user equipment (UE), or other suitable terminology. The wireless communications system may support wireless communications with one or multiple user communication devices by utilizing resources of the wireless communication system, such as time resources (e.g., symbols, slots, subslots, mini-slots, aggregated slots, subframes, frames, or the like) or frequency resources (e.g., subcarriers, carriers). Additionally, the wireless communications system may support wireless communications across various radio access technologies (RATs) including third generation (3G) RAT, fourth generation (4G) RAT, fifth generation (5G) RAT, and other suitable RATs beyond 5G. In some cases, a wireless communications system may be a non-terrestrial network (NTN), which may support various communication devices for wireless communications in the NTN. For example, an NTN Attorney Docket. No. SMM920210297-WO-PCT may include network entities onboard non-terrestrial vehicles such as satellites, unmanned aerial vehicles (UAV), and high-altitude platforms systems (HAPS), as well as network entities on the ground, such as gateway entities capable of transmitting and receiving over long distances.

Sidelink communication in a wireless communications system between devices occurs over a set of physical channels on which a transport channel is mapped for control signaling, and includes a physical sidelink shared channel (PSSCH). A PSFCH carries sidelink acknowledgement feedback from a receiving device to a transmitting device. A PSFCH symbol is transmitted periodically and occurs in the last slot of a PSFCH period (i.e. there is one PSFCH symbol per PSFCH period N). This is sufficient for a licensed carrier scenario, especially in a scheduled mode, but imposes limitations for the case of a sidelink transmission that occurs on a sidelink carrier.

### SUMMARY

The present disclosure relates to methods and devices that support PSFCH symbol determination as defined in the appended claims.

### BRIEF DESCRIPTION OF THE DRAWINGS

Various aspects of the present disclosure for PSFCH symbol determination are described with reference to the following Figures. The same numbers may be used throughout to reference like features and components shown in the Figures.
FIG. 1 illustrates an example of a wireless communications system that supports PSFCH symbol determination in accordance with aspects of the present disclosure.
FIG. 2 illustrates an example of a slot with fourteen sidelink symbols, as related to PSFCH symbol determination in accordance with aspects of the present disclosure.
FIG. 3 illustrates an example of a slot with fourteen sidelink symbols and a second PSFCH symbol, as related to PSFCH symbol determination in accordance with aspects of the present disclosure.
FIG. 4 illustrates an example of a slot with fourteen sidelink symbols and additional PSFCH symbols #2, #3, as related to PSFCH symbol determination in accordance with aspects of the present disclosure.
FIG. 5 illustrates an example of a slot with fourteen sidelink symbols and PSFCH symbols arranged in chronological order, as related to PSFCH symbol determination in accordance with aspects of the present disclosure.
FIG. 6 illustrates an example of PSFCH symbols arranged in chronological slot order with an additional PSFCH symbol in a preceding slot, as related to PSFCH symbol determination in accordance with aspects of the present disclosure.
FIG. 7 illustrates an example of PSFCH symbols arranged in chronological slot order with an additional PSFCH symbol in a subsequent slot, as related to PSFCH symbol determination in accordance with aspects of the present disclosure.
FIG. 8 illustrates an example block diagram of components of a device (e.g., a sidelink device, UE) that supports PSFCH symbol determination in accordance with aspects of the present disclosure.
FIG. 9 illustrates an example block diagram of components of a device (e.g., a network device, base station) that supports PSFCH symbol determination in accordance with aspects of the present disclosure.
FIGs. 10-13 illustrate flowcharts of methods that support PSFCH symbol determination in accordance with aspects of the present disclosure.

### DETAILED DESCRIPTION

Implementations of PSFCH symbol determination are described, such as related to a sidelink device (e.g., a UE) determining multiple (e.g., more than one) PSFCH symbols per a PSFCH period. By utilizing the described techniques, additional PSFCH symbols can be transmitted in a PSFCH period. Further, the PSFCH symbols can be ordered in the PSFCH period to maintain backward compatibility for the first PSFCH symbol or indices. Additionally, techniques provide a determination of resource mapping for extended PSFCH indices.

For a communication device (e.g., a UE) operating on an unlicensed carrier, there are two main motivations for increasing the number of PSFCH symbols per PSFCH period over the current techniques. With respect to failed clear channel assessment, in many geographical and/or frequency regions, a device is required to pass a clear channel assessment (CCA) procedure, such as listen before talk (LBT), before being allowed to transmit on the unlicensed carrier (shared spectrum). If the CCA fails for a given transmission instance, the device is not allowed to transmit. Consequently, this may lead to not being able to transmit a PSFCH in a specific PSFCH period. This leads to potentially unnecessary retransmissions of packets, as the original data transmitter expecting an ACK/NACK feedback on the PSFCH may trigger a retransmission due to the missing ACK/NACK feedback. An additional problem occurs when a UE reports feedback on the PSFCH for the data only if the feedback is NACK, for groupcast transmissions, where a missing feedback due to a failed CCA may be interpreted as an ACK by the original data transmitter, even though the feedback transmitter may have intended to convey a NACK to request a retransmission. In this case, the original data transmitter may be unaware that a retransmission of the data is necessary, resulting in an undetected data loss.

Additionally, with respect to an explicit trigger of ACK/NACK (i.e. HARQ) feedback transmission, sidelink may adopt the possibility to send an explicit request for an ACK/NACK transmission by a receive (Rx) UE, such as in the case of an earlier ACK/NACK transmission is missing due to a failed CCA, or in the case that the Rx UE is generally waiting for an ACK/NACK trigger and does not determine a PSFCH transmission resource for ACK/NACK of a PSSCH transmission. For example, the sidelink control information (SCI) for the PSSCH transmission may indicate an inapplicable value for a PSSCH to feedback timing, or the transmit (Tx) UE may otherwise indicate in an SCI that ACK/NACK feedback is expected only after transmitting an explicit ACK/NACK feedback trigger.

Aspects of the disclosure are directed to a sidelink device, such as a UE or other network communication device, that establishes a configuration of multiple PSFCH symbols within a PSFCH period. The sidelink device can then transmit PSFCH information based on the multiple PSFCH symbols within the PSFCH period. To establish the configuration, the sidelink device can receive, from a base station, a signaling indicating the configuration of the multiple PSFCH symbols within the PSFCH period. Alternatively, to establish the configuration, the sidelink device determines the configuration of the multiple PSFCH symbols within the PSFCH period.

Aspects of the present disclosure are described in the context of a wireless communications system. Aspects of the present disclosure are further illustrated and described with reference to device diagrams and flowcharts that relate to PSFCH symbol determination.

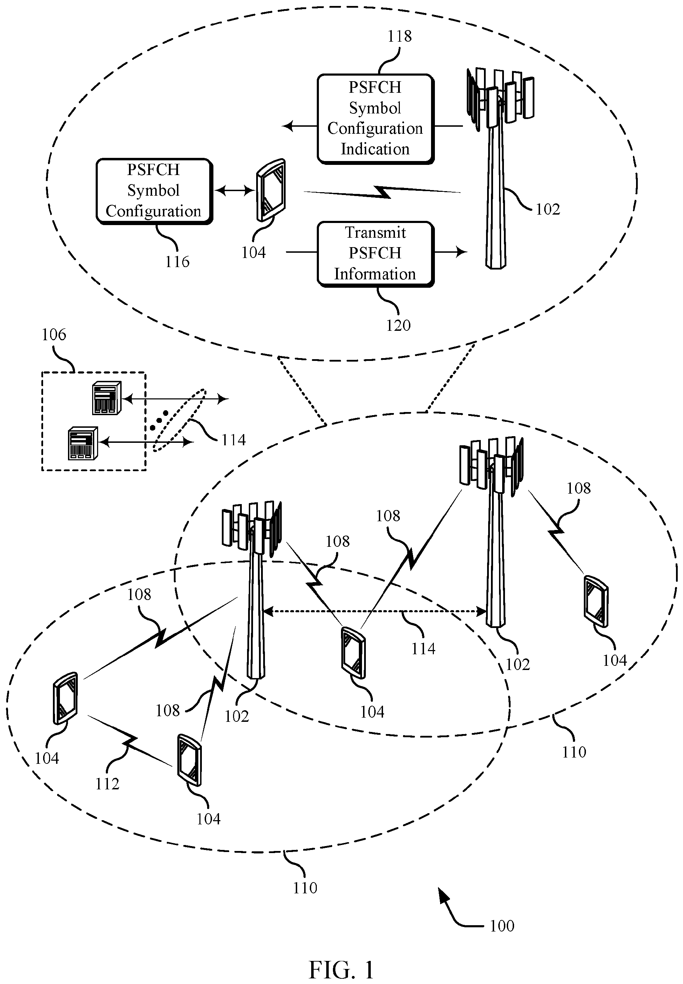

**FIG. 1** illustrates an example of a wireless communications system 100 that supports PSFCH symbol determination in accordance with aspects of the present disclosure. The wireless communications system 100 may include one or more base stations 102, one or more UEs 104, and a core network 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as a NR network. In other implementations, the wireless communications system 100 may be a combination of a 4G network and a 5G network. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more base stations 102 may be dispersed throughout a geographic region to form the wireless communications system 100. One or more of the base stations 102 described herein may be, or include, or may be referred to as a base transceiver station, an access point, a NodeB, an eNodeB (eNB), a next-generation NodeB (gNB), a Radio Head (RH), a relay node, an integrated access and backhaul (IAB) node, or other suitable terminology. A base station 102 and a UE 104 may communicate via a communication link 108, which may be a wireless or wired connection. For example, a base station 102 and a UE 104 may perform wireless communication over a NR-Uu interface.

A base station 102 may provide a geographic coverage area 110 for which the base station 102 may support services (e.g., voice, video, packet data, messaging, broadcast, etc.) for one or more UEs 104 within the geographic coverage area. For example, a base station 102 and a UE 104 may support wireless communication of signals related to services (e.g., voice, video, packet data, messaging, broadcast, etc.) according to one or multiple radio access technologies. In some implementations, a base station 102 may be moveable, such as when implemented as a gNB onboard a satellite or other non-terrestrial station (NTS) associated with a non-terrestrial network (NTN). In some implementations, different geographic coverage areas 110 associated with the same or different radio access technologies may overlap, and different geographic coverage areas 110 may be associated with different base stations 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region or coverage area 110 of the wireless communications system 100. A UE 104 may include or may be referred to as a mobile device, a wireless device, a remote device, a handheld device, a customer premise equipment (CPE), a subscriber device, or as some other suitable terminology. In some implementations, the UE 104 may be referred to as a unit, a station, a terminal, or a client, among other examples. Additionally, or alternatively, a UE 104 may be referred to as an Internet-of-Things (IoT) device, an Internet-of-Everything (IoE) device, or as a machine-type communication (MTC) device, among other examples. In some implementations, a UE 104 may be stationary in the wireless communications system 100. In other implementations, a UE 104 may be mobile in the wireless communications system 100, such as an earth station in motion (ESIM).

The one or more UEs 104 may be devices in different forms or having different capabilities. Some examples of UEs 104 are illustrated in FIG. 1. A UE 104 may be capable of communicating with various types of devices, such as the base stations 102, other UEs 104, or network equipment (e.g., the core network 106, a relay device, a gateway device, an integrated access and backhaul (IAB) node, a location server that implements the location management function (LMF), or other network equipment). Additionally, or alternatively, a UE 104 may support communication with other base stations 102 or UEs 104, which may act as relays in the wireless communications system 100.

A UE 104 may also support wireless communication directly with other UEs 104 over a communication link 112. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 112 may be referred to as a sidelink. For example, a UE 104 may support wireless communication directly with another UE 104 over a PC5 interface.

A base station 102 may support communications with the core network 106, or with another base station 102, or both. For example, a base station 102 may interface with the core network 106 through one or more backhaul links 114 (e.g., via an S1, N2, or other network interface). The base stations 102 may communicate with each other over the backhaul links (e.g., via an X2, Xn, or another network interface). In some implementations, the base stations 102 may communicate with each other directly (e.g., between the base stations 102). In some other implementations, the base stations 102 may communicate with each other indirectly (e.g., via the core network 106). In some implementations, one or more base stations 102 may include subcomponents, such as an access network entity, which may be an example of an access node controller (ANC). The ANC may communicate with the one or more UEs 104 through one or more other access network transmission entities, which may be referred to as remote radio heads, smart radio heads, gateways, transmission-reception points (TRPs), and other network nodes and/or entities.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)), and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management for the one or more UEs 104 served by the one or more base stations 102 associated with the core network 106.

According to implementations, one or more of the UEs 104 and base stations 102 are operable to implement various aspects of PSFCH symbol determination, as described herein. For instance, the UE 104 (e.g., as a sidelink device) establishes a PSFCH symbol configuration 116 of multiple PSFCH symbols within a PSFCH period. In one or more implementations, the UE 104 determines the PSFCH symbol configuration 116. Alternatively or in addition, the base station 102 may transmit a PSFCH symbol configuration indication 118 to the UE 104 to establish the PSFCH symbol configuration. The UE 104 can then transmit PSFCH information 120 to the base station 102 (or other network communication device) based on the multiple PSFCH symbols within the PSFCH period

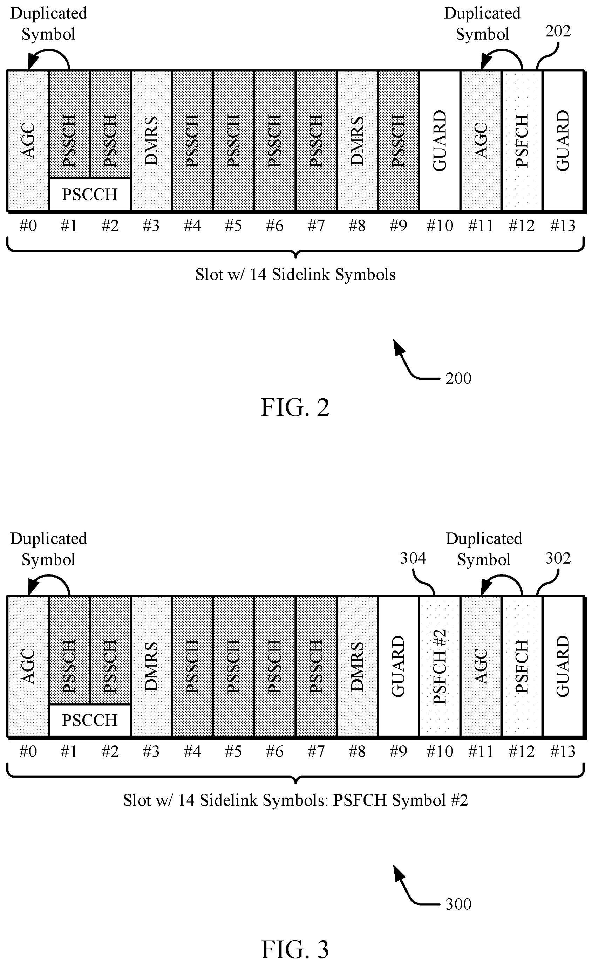

**FIG. 2** illustrates an example 200 of a slot with fourteen sidelink symbols, as related to PSFCH symbol determination. In NR vehicle-to-everything (V2X) for example, the purpose of the PSFCH 202 is to carry the HARQ feedback from Rx UE(s) to a Tx UE. Within a resource pool, resources for PSFCH can be (pre-)configured periodically with a period of 1, 2, or 4 slot(s) (i.e., there is a slot with PSFCH every 1, 2, or 4 slot(s) within a resource pool) according to 3GPP NR Release 17; however it should be understood that techniques described in this disclosure are also applicable to other period values (such as 8 or 16 slots, for example). The PSFCH is sent in one symbol among the last sidelink symbols in a PSCCH/PSSCH slot. Prior to the PSFCH symbol, one AGC symbol is used, which is a copy of the PSFCH symbol, and the symbol after the PSFCH symbol is used as a guard symbol. The three sidelink symbols associated with a PSFCH come after the PSSCH symbols. As a result, the number of PSSCH symbols (without the AGC and guard symbols) can be at most nine (9) symbols when a slot carries PSFCH.

For a sidelink unicast transmission, a Rx UE sends an ACK if it has successfully decoded the transport block (TB) carried in a PSSCH, or it sends a NACK if it has not decoded the TB after decoding the 1st-stage SCI. For sidelink groupcast transmissions, two options (option 1 and option 2) are supported for the sidelink HARQ feedback in NR V2X. For option 1, an Rx UE transmits a NACK if it has not successfully decoded the TB (after decoding the 1st-stage SCI) and if its relative distance to the Tx UE (referred as Tx-Rx distance) is less than or equal to the required communication range (indicated in the 2nd-stage SCI). Otherwise, the Rx UE does not transmit any HARQ feedback. Given that the HARQ feedback for this option would only consist of a NACK, option 1 is referred to as NACK-only feedback.

The PSFCH symbol that can be used for the HARQ feedback for a given PSSCH transmission corresponds to the PSFCH symbol in the first slot with PSFCH after a (pre-)configured number of *K* slots after the PSSCH. The *K* represents the minimum number of slots within the resource pool between a slot with a PSSCH transmission and the slot containing PSFCH for the HARQ feedback of this transmission. Consider that the last symbol of a PSSCH transmission is on slot *n.* The HARQ feedback for this transmission is expected in slot *n + a,* where *a* is the smallest integer equal or higher than *K* such that slot *n + a* contains PSFCH. For example, if the earliest possible slot for the HARQ feedback (slot *n*+*a*) does not contain PSFCH, then the HARQ feedback is sent at the next slot containing PSFCH (i.e., after slot *n*+*a*). The time gap of at least *K* slots allows considering the Rx UE's processing delay in decoding the PSCCH and generating the HARQ feedback. According to 3GPP NR Release 17, *K* can be equal to 2 or 3, and a single value of *K* can be (pre-)configured per resource pool. This allows several Rx UEs using the same resource pool to utilize the same mapping of PSFCH resource(s) for the HARQ feedback. With the parameter *K,* the *N* PSSCH slots associated with a slot with PSFCH can be determined. In an example with *K=3,* the *N=*4 PSSCH slots associated with the PSFCHs at slot *n+6* correspond to PSSCH slots *n, n+1, n+2,* and *n+3.*

With *L* sub-channels in a resource pool and *N* PSSCH slots associated with a slot containing PSFCH, there are then *N* times *L* sub-channels associated with a PSFCH symbol. With *M* PRBs available for PSFCH in a PSFCH symbol, there are *M* PRBs available for the HARQ feedback of transmissions over *N* times *L* sub-channels. With *M* configured to be a multiple of *N* times *L,* then a distinct set of *M*ₛₑₜ *= M*/(*N* · *L*) PRBs can be associated with the HARQ feedback for each sub-channel within a PSFCH period. The first set of *M*ₛₑₜ PRBs among the *M* PRBs available for PSFCH are associated with the HARQ feedback of a transmission in the first sub-channel in the first slot. The second set of *M*ₛₑₜ PRBs are associated with the HARQ feedback of a transmission in the first sub-channel in the second slot and so on. For example if *N =* 4, *L* = 3 and with all PRBs in a PSFCH symbol available for PSFCH, the HARQ feedback for a transmission at PSSCH *x* is sent on the set *x* of *M*ₛₑₜ PRBs in the corresponding PSFCH symbol, with *x*=1,...,12. For a transmission in a PSSCH with *L*_{PSSCH}>1 sub-channels, *L*_{PSSCH} times *M*ₛₑₜ PRBs could be available for the HARQ feedback of this transmission.

A set of *M*ₛₑₜ PRBs associated with a sub-channel are shared among multiple Rx UEs in case of ACK/NACK feedback for groupcast communications (option 2), or in the case of different PSSCH transmissions in the same sub-channel. For each PRB available for PSFCH, there are *Q* cyclic shift pairs available to support the ACK or NACK feedback of *Q* RX UEs within the PRB. For a resource pool, the number of cyclic shift pairs *Q* is (pre-)configured and can be equal to 1, 2, 3 or 6. With each PSFCH used by one RX UE, *F* available PSFCHs can be used for the ACK/NACK feedback of up to *F* RX UEs. The *F* PSFCHs can be determined based on two options: either based on the *L*_{PSSCH} sub-channels used by a PSSCH or based only on the starting sub-channel used by a PSSCH (i.e., based only on one sub-channel for the case when *L*_{PSSCH} >1). Thus, *F* can be computed based on: (i) *L*_{PSSCH} sub-channels of a PSSCH; (ii) *M*ₛₑₜ PRBs for PSFCH associated with each sub-channel; and (iii) *Q* cyclic shift pairs available in each PRB. Depending on which of two supported HARQ feedback options is (pre-)configured, there are either then *F*= *L*_{PSSCH} · *M*ₛₑₜ ·*Q* PSFCHs (associated with the *L*_{PSSCH} sub-channels of a PSSCH) or *F= M*ₛₑₜ ·*Q* PSFCHs (associated with the starting sub-channel of a PSSCH) available for multiplexing the HARQ feedback for the PSSCH.

Similar to the previous physical uplink control channel (PUCCH) on the Uu interface, the available *F* PSFCHs are indexed based on a PRB index (frequency domain) and a cyclic shift pair index (code domain). Depending on the (pre-)configured option, there are either *L*_{PSSCH} · *M*ₛₑₜ or *M*ₛₑₜ PRBs available for PSFCH. The mapping of the PSFCH index *i* (*i*=0,1,2,...,*F*-1) to the *L*p_{SSCH} · *M*ₛₑₜ or *M*ₛₑₜ PRBs and to the *Q* cyclic shift pairs is such that the PSFCH index *i* first increases with the PRB index until reaching the number of available PRBs for PSFCH (i.e., *L*_{PSSCH} · *M*ₛₑₜ or *M*ₛₑₜ). Then, it increases with the cyclic shift pair index, again with the PRB index and so on.

Among the *F* PSFCHs available for the HARQ feedback of a given transmission, an Rx UE selects for its HARQ feedback the PSFCH with index *i* given by: *i*=(*T*_{ID}+*R*_{ID})mod(*F*) where *T*_{ID} is the Layer 1 ID of the Tx UE (indicated in the 2nd-stage SCI) (yields *F* values from 0 to *F-*1)*. R*_{ID}=0 for unicast ACK/NACK feedback and groupcast NACK-only feedback (option 1). For groupcast ACK/NACK feedback (option 2), *R*_{ID} is equal to the Rx UE identifier within the group, which is indicated by higher layers. For a number *X* of Rx UEs within a group, the Rx UE identifier is an integer between 0 and *X-*1*.* An Rx UE determines which physical resource block (PRB) and cyclic shift pair should be used for sending its HARQ feedback based on the PSFCH index *i*. The Rx UE uses the first or second cyclic shift from the cyclic shift pair associated with the selected PSFCH index i in order to send NACK or ACK, respectively.

In aspects of the described PSFCH symbol determination, the UE determines a plurality of PSFCH symbols per PSFCH period (the conventional implementation is a PSFCH symbol is transmitted periodically and occurs in the last slot of a PSFCH period, i.e. there is one PSFCH symbol per PSFCH period N). A PSFCH symbol(s) should be understood in the strict sense such that an AGC symbol, which even though factually is a copy of a PSFCH symbol, is not understood as a PSFCH symbol. A PSFCH period is currently defined as *sl-PSFCH-Period*, which indicates the period of PSFCH resource in the unit of slots within the resource pool. If set to *sl0,* there is no resource for PSFCH, and HARQ feedback for all transmissions in the resource pool is disabled. Similarly stated, a UE can be provided, by *sl-PSFCH-Period,* a number of slots in a resource pool for a period of PSFCH transmission occasion resources, and if the number is zero, PSFCH transmissions from the UE in the resource pool are disabled.

In aspects of PSFCH symbol determination as described in this disclosure, and in a first implementation, a UE can determine a plurality of PSFCH symbols per PSFCH period. This can be accomplished using a PSFCH symbol counter N_{PSFCH}, counting the number of PSFCH symbols per PSFCH period, which can be pre-configured or configurable by radio resource control (RRC), and can take values from 1 to N_{PSFCH,max}, i.e. 1 ≤ N_{PSFCH} ≤ N_{PSFCH,max}, where N_{PSFCH,max} is the number of symbols per slot. The PSFCH symbols may be indexed from 0 to N_{PSFCH} -1 or from 1 to N_{PSFCH}. For simplicity but without loss of generality, the present description and figures adopt the indexing from 1 to N_{PSFCH}, so that the first PSFCH symbol is PSFCH symbol #1 (in some figures simply referred to as "PSFCH" without an index number), and the N_{PSFCH} -th PSFCH symbol is PSFCH #N_{PSFCH}.

**FIG. 3** illustrates an example 300 a slot with fourteen sidelink symbols and a second PSFCH symbol, as related to PSFCH symbol determination in accordance with aspects of the present disclosure. In this first implementation, and with respect to the PSFCH symbol counter N_{PSFCH}, the PSFCH symbols are included in the same slot (e.g. the last slot in a PSFCH period). Each PSFCH symbol occupies one symbol, the N_{PSFCH} symbols are preferably adjacent to each other, and are located (and subsequently transmitted) among the last sidelink symbols in a physical sidelink control channel (PSCCH) / physical sidelink shared channel (PSSCH) slot. The adjacency may be interrupted by an AGC symbol, as shown in the figure.

For example, if N_{PSFCH}=2, as a result, the number of PSSCH symbols (without the AGC and guard symbol) can be at most eight (8) symbols when a slot carries PSFCH(s). Assuming a slot consisting of 14 symbols, the first PSFCH symbol 302 is located (and subsequently transmitted) in symbol #12, preceded in symbol #11 by an AGC symbol that is a duplicate of symbol #12. Symbol #10 carries the second PSFCH symbol 304, preceded by a guard symbol in symbol #9. Although such a structure may appear to be counter-intuitive because of the reverse order of first and second PSFCH symbols, it may be beneficial to keep compatibility with the conventional structure that places the first (and only) PSFCH symbol at #12 and its duplicate as AGC symbol #11.

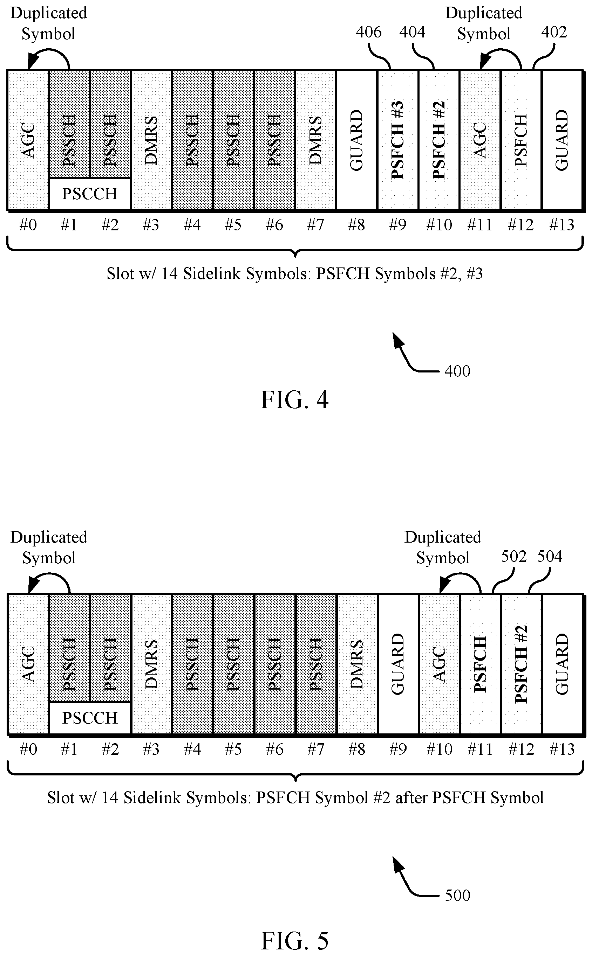

**FIG. 4** illustrates an example 400 a slot with fourteen sidelink symbols and additional PSFCH symbols #2, #3, as related to PSFCH symbol determination in accordance with aspects of the present disclosure. In the case of N_{PSFCH}>2, the additional PSFCH symbols are placed in reverse order prior to the second PSFCH symbol, and the N_{PSFCH}-th PSFCH symbol (being the first in chronological transmission order) is preceded by a guard symbol. For example, for N_{PSFCH}=3, the first PSFCH symbol 402 is located (and subsequently transmitted) in symbol #12, preceded in symbol #11 by an AGC symbol that is a duplicate of symbol #12, preceded by the second PSFCH symbol 404 in symbol #10, preceded by the third PSFCH symbol 406 in symbol #9, preceded by a guard symbol in symbol #8. This may further cause placing a demodulation reference symbol (DMRS) symbol prior to the guard symbol (e.g., in symbol #7).

**FIG. 5** illustrates an example 500 a slot with fourteen sidelink symbols and PSFCH symbols arranged in chronological order, as related to PSFCH symbol determination in accordance with aspects of the present disclosure. In this example 500, as an alternative, the PSFCH symbols are arranged in chronological symbol order. For example if N_{PSFCH}=2, as a result and assuming a slot consisting of fourteen (14) symbols, a guard symbol is located (and subsequently transmitted) in symbol #9, followed by an AGC symbol in symbol #10 being a duplicate of the first PSFCH symbol 502 located (and subsequently transmitted) in symbol #11, followed by the second PSFCH symbol 504 in symbol #12. While this order breaks the compatibility with the conventional structure, it can be beneficial for a simplified implementation due to the "normal" pipelining of PSFCH symbols.

With respect to configurability options by (pre-)configuration (e.g., per resource pool), the total number of PSFCH symbols N_{PSFCH} per PSFCH period, or alternatively, a number of additional PSFCH symbols per PSFCH period, can be configurable (e.g., by the network). In a second implementation, a PSFCH aggregation factor can be (pre-)configured per resource pool, where the PSFCH aggregation defines a number of consecutive PSFCH symbols within a slot in a PSFCH period. The adjacency of PSFCH symbols, however, allows AGC symbol(s) to be placed between them. The PSFCH symbol order (i.e. the placement of PSFCH #1, #2, ... ) can be configurable (e.g., by the network), such as in the backward-compatible way (with PSFCH#1 at symbol #12 and AGC at #11, PSFCH #n+1 at symbol #11-n) or in the sequential way (with PSFCH#n at symbol 12-N_{PSFCH} +n and AGC at symbol #12-N_{PSFCH}), which can be configurable. Additionally, whether additional PSFCH symbols are to be used can also be configurable (e.g., by the network). Setting N_{PSFCH} to 1 can be used to implicitly disable additional PSFCH symbols.

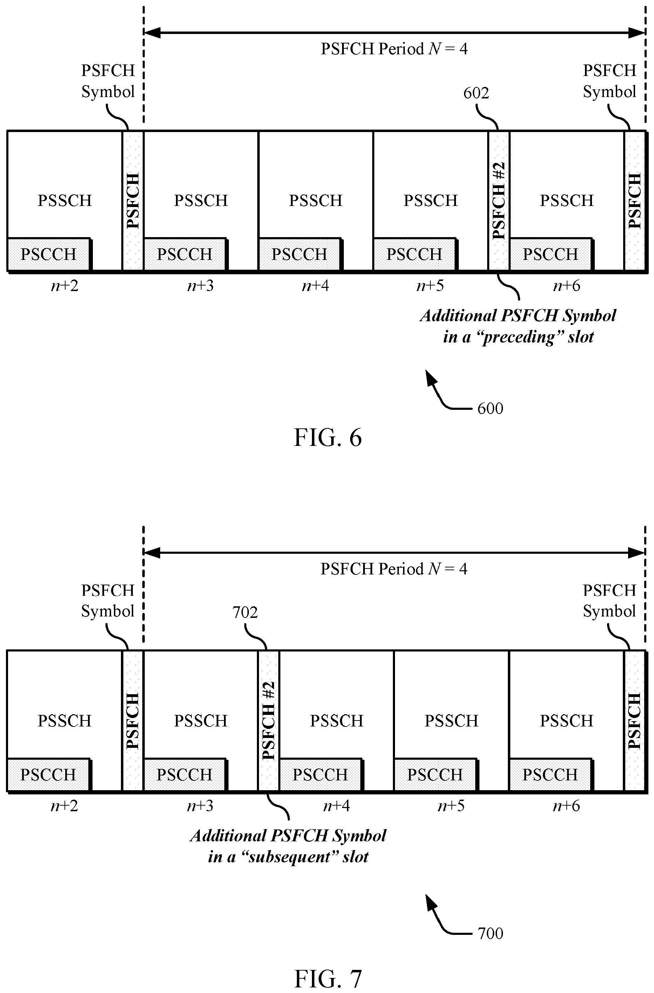

**FIG. 6** illustrates an example 600 of PSFCH symbols arranged in chronological slot order with an additional PSFCH symbol in a preceding slot, as related to PSFCH symbol determination in accordance with aspects of the present disclosure. In this example 600, and in the second implementation, the N_{PSFCH} PSFCH symbols are included in different slots (e.g., in the last adjacent N_{PSFCH} slots in a PSFCH period). For example if the PSFCH period N=4 and N_{PSFCH}=2, the two last slots in a PSFCH period each contain one PSFCH symbol. Similar to the implementation described above, the PSFCH symbols may be arranged in a chronologically reversed manner, where for example, the first PSFCH symbol is located (and subsequently transmitted) in the last slot of a PSFCH period, and the second PSFCH symbol 602 is located (and subsequently transmitted) in a slot preceding the last slot in a PSFCH period. In this case the PSFCH symbol counter N_{PSFCH}, which can be pre-configured or configurable by radio resource control (RRC), can take values from 1 to N_{PSFCH,max}, (i.e., 1 ≤ N_{PSFCH} ≤ N_{PSFCH,max}, where N_{PSFCH,max} is the PSFCH period N). The PSFCH symbols may be indexed from 0 to N_{PSFCH} -1 or from 1 to N_{PSFCH}. For simplicity, but without loss of generality, the present description and figures adopt the indexing from 1 to N_{PSFCH}, so that the first PSFCH symbol is PSFCH symbol #1 (in some figures simply referred to as "PSFCH" without an index number), and the N_{PSFCH} -th PSFCH symbol is PSFCH #N_{PSFCH}.

The N_{PSFCH}-th PSFCH symbol is located (and subsequently transmitted) in a slot preceding the slot where the N_{PSFCH}-minus-one-th PSFCH symbol is located (and subsequently transmitted). This again maintains the structure and therefore compatibility with the conventional structure that places the first (and only) PSFCH symbol in the last slot of a PSFCH period. As an alternative, the PSFCH symbols can be arranged in chronological slot order. For example if N_{PSFCH}=2, the result will be the first PSFCH symbol being located (and subsequently transmitted) in the slot directly preceding the last slot in a PSFCH period, and the second PSFCH symbol is located (and subsequently transmitted) in the last slot of a PSFCH period. While this order breaks the compatibility with the conventional structure, it can be beneficial for a simplified implementation due to the "normal" pipelining of PSFCH symbols and slots.

**FIG. 7** illustrates an example 700 of PSFCH symbols arranged in chronological slot order with an additional PSFCH symbol in a subsequent slot, as related to PSFCH symbol determination in accordance with aspects of the present disclosure. In this example 700, and in an alternative implementation, the additional PSFCH symbols are located in subsequent slot(s) of the 'regular' PSFCH symbol. This offers again the benefit of PSFCH symbols being arranged in chronological slot order, which keeps compatibility with the conventional structure of placing the first PSFCH resources in the expected slot as before, and puts additional PSFCH resources (e.g., the PSFCH symbol 702) in subsequent slot(s), which can be beneficial for a simplified implementation due to the "normal" pipelining of PSFCH symbols and slots.

With respect to configurability options, the total number of PSFCH symbols N_{PSFCH} per PSFCH period, or alternatively, the number of additional PSFCH symbols per PSFCH period, can be configurable (e.g., by the network). The PSFCH symbol order (i.e., the placement of PSFCH #1, #2, ...) can be configurable (e.g., by the network), such as whether putting the "additional" PSFCH symbol(s) in slots prior to the regular PSFCH symbol, or putting the "additional" PSFCH symbol(s) in slots after the regular PSFCH symbol, which can be configurable. Additionally, whether additional PSFCH symbols are to be used can be configurable (e.g. by the network). Setting N_{PSFCH} to 1 implicitly disables additional PSFCH symbols. In another implementation, a PSFCH aggregation factor could be (pre-)configured per resource pool, where the PSFCH aggregation defines a number of PSFCH symbols in consecutive slots in a PSFCH period.

In a third implementation, one or more of the implementations described above can be combined. Further, there can be a first PSFCH symbol counter N_{PSFCH,1} being used according to the first implementation, for example, to determine a plurality of PSFCH symbols within a slot (e.g., based on symbols), and a second PSFCH symbol counter N_{PSFCH,2} being used according to the second implementation, for example, to determine a plurality of slots carrying PSFCH symbols within a PSFCH period. Effectively, the overall PSFCH symbol counter can be computed as N_{PSFCH}= N_{PSFCH,1}+ N_{PSFCH,2}, and can take values from 1 to N_{PSFCH,max}, i.e. 1 ≤ N_{PSFCH} ≤ N_{PSFCH,max}, where N_{PSFCH,max} is the number of symbols per PSFCH period N. As described above, the first implementation is limited by the number of symbols per slot, and the second implementation is limited by the number of slots per PSFCH period. Accordingly, the combination of implementations is upper-bounded by the number of slots per PSFCH period.

With respect to other configurability options, and as in one or more of the implementations described above, each of the placement and the number of PSFCH symbols can be configurable by the network. In another implementation (e.g., a fourth implementation), the ACK/NACK information transmitted in at least two N_{PSFCH} PSFCH symbols per PSFCH period can be identical. This can be particularly beneficial in the case of CCA failure, where the CCA is performed for each of the PSFCH symbols. Consequently, the likelihood that at least one of the CCAs for the PSFCH symbols succeeds is increased, so that it is more likely that a data transmitter UE will receive the intended ACK/NACK feedback.

In another implementation (e.g., a fifth implementation), the ACK/NACK resources in the N_{PSFCH} PSFCH symbols per PSFCH period are extended. For instance, assume that the capacity of the single PSFCH symbol per PSFCH period is N_{ACK-NACK} ACK/NACK bits (or generally symbols). By extending the number of available ACK/NACK resources by a factor of N_{PSFCH}, a total capacity for N_{ACK-NACK} · N_{PSFCH} ACK/NACK bits is available per PSFCH period. To determine which resource is used for a specific ACK/NACK bit, the existing algorithm is extended to include N_{PSFCH} as an additional dimension. As outlined above, resources are conventionally determined as follows: Depending on which of two supported HARQ feedback options is (pre-)configured, there are either *F*= *L*_{PSSCH} · *M*ₛₑₜ ·*Q* PSFCHs (associated with the *L*_{PSSCH} sub-channels of a PSSCH) or *F= M*ₛₑₜ ·*Q* PSFCHs (associated with the starting sub-channel of a PSSCH) available for multiplexing the HARQ feedback for the PSSCH. However, in aspects of the disclosed implementation, this is extended so that, depending on which of the two supported HARQ feedback options is (pre-)configured, there are either *F*= N_{PSFCH} · *L*_{PSSCH} · *M*ₛₑₜ ·*Q* PSFCHs (associated with the *L*_{PSSCH} sub-channels of a PSSCH) or *F*= N_{PSFCH} · *M*ₛₑₜ ·*Q* PSFCHs (associated with the starting sub-channel of a PSSCH) available for multiplexing the HARQ feedback for the PSSCH.

The selection of the PSFCH with index *I* can then still follow the same conventional mechanism, such as among the *F* PSFCHs available for the HARQ feedback of a given transmission, an Rx UE selects for its HARQ feedback the PSFCH with index *i* given by: *i*=(*T*_{ID}+*R*_{ID})mod(*F*) (yields *F* values from 0 to *F*-1). Note that the mapping of PSFCH index *i* to a PSFCH symbol would be such that PSFCH indices *i*=0 to *i*= (*F*/*N*_{PSFCH})-1 are located on the first PSFCH symbol in a PSFCH period, PSFCH indices *i*= *F*/N_{PSFCH} to *i=* 2·(*F*/N_{PSFCH})-1 are located on the second PSFCH symbol in a PSFCH period, and so forth.

A combination of one or more described implementations (e.g., the fourth and fifth implementations) may be employed such that a first subset of N_{PSFCH} PSFCH symbols per PSFCH period are identical, as described above, and the remaining (=second) subset of N_{PSFCH} PSFCH symbols per PSFCH period offers additional ACK/NACK resources as also described above. With respect to cconfigurability options for the one or more described implementations, the network can configure if and/or which of the techniques should be used for the PSFCH symbols (e.g., per resource pool). This configuration may only be required if one or more of the above described implementations are being used or enabled.

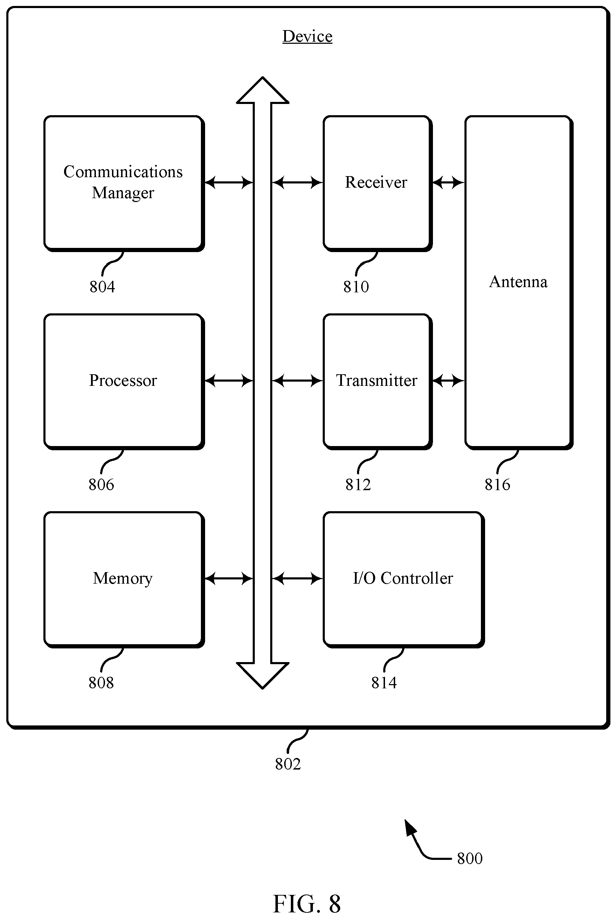

**FIG. 8** illustrates an example of a block diagram 800 of a device 802 that supports PSFCH symbol determination in accordance with aspects of the present disclosure. The device 802 may be an example of a UE 104 as described herein. The device 802 may support wireless communication and/or network signaling with one or more base stations 102, other UEs 104, network entities and devices, or any combination thereof. The device 802 may include components for bi-directional communications including components for transmitting and receiving communications, such as a communications manager 804, a processor 806, a memory 808, a receiver 810, a transmitter 812, and an I/O controller 814. These components may be in electronic communication or otherwise coupled (e.g., operatively, communicatively, functionally, electronically, electrically) via one or more interfaces (e.g., buses).

The communications manager 804, the receiver 810, the transmitter 812, or various combinations thereof or various components thereof may be examples of means for performing various aspects of the present disclosure as described herein. For example, the communications manager 804, the receiver 810, the transmitter 812, or various combinations or components thereof may support a method for performing one or more of the functions described herein.

In some implementations, the communications manager 804, the receiver 810, the transmitter 812, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 806 and the memory 808 coupled with the processor 806 may be configured to perform one or more of the functions described herein (e.g., by executing, by the processor 806, instructions stored in the memory 808).

Additionally or alternatively, in some implementations, the communications manager 804, the receiver 810, the transmitter 812, or various combinations or components thereof may be implemented in code (e.g., as communications management software or firmware) executed by the processor 806. If implemented in code executed by the processor 806, the functions of the communications manager 804, the receiver 810, the transmitter 812, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the communications manager 804 may be configured to perform various operations (e.g., receiving, monitoring, transmitting) using or otherwise in cooperation with the receiver 810, the transmitter 812, or both. For example, the communications manager 804 may receive information from the receiver 810, send information to the transmitter 812, or be integrated in combination with the receiver 810, the transmitter 812, or both to receive information, transmit information, or perform various other operations as described herein. Although the communications manager 804 is illustrated as a separate component, in some implementations, one or more functions described with reference to the communications manager 804 may be supported by or performed by the processor 806, the memory 808, or any combination thereof. For example, the memory 808 may store code, which may include instructions executable by the processor 806 to cause the device 802 to perform various aspects of the present disclosure as described herein, or the processor 806 and the memory 808 may be otherwise configured to perform or support such operations.

For example, the communications manager 804 may support wireless communication and/or network signaling at a device (e.g., the device 802, a UE) in accordance with examples as disclosed herein. The communications manager 804 and/or other device components may be configured as or otherwise support an apparatus, such as a UE, including a transceiver; a processor coupled to the transceiver, the processor and the transceiver configured to cause the apparatus to: establish a configuration of multiple PSFCH symbols within a PSFCH period; and transmit PSFCH information based at least in part on the multiple PSFCH symbols within the PSFCH period.

Additionally, the apparatus (e.g., a UE) includes any one or combination of: to establish the configuration, the processor and the transceiver are configured to cause the apparatus to receive a signaling indicating the configuration of the multiple PSFCH symbols within the PSFCH period. To establish the configuration, the processor is configured to cause the apparatus to determine the configuration of the multiple PSFCH symbols within the PSFCH period. A number of the multiple PSFCH symbols is greater than or equal to one and less than or equal to a number of symbols per slot. A number of the multiple PSFCH symbols is greater than or equal to one and less than or equal to a number of slots per the PSFCH period. A number of the multiple PSFCH symbols is greater than or equal to one and less than or equal to a number of symbols per the PSFCH period. A number of the multiple PSFCH symbols is greater than or equal to two and less than or equal to a number of slots per the PSFCH period. A symbol designated for AGC associated with the PSFCH information is excluded from being attributable to the multiple PSFCH symbols associated with the number of slots in the PSFCH period. The apparatus configured to receive a physical sidelink shared channel (PSSCH) transmission; and transmit the PSFCH information as ACK/NACK feedback responsive to the received PSSCH transmission. The configuration of the multiple PSFCH symbols maps an increasing PSFCH symbol index to a slot index in a decreasing order in the PSFCH period. The configuration of the multiple PSFCH symbols maps an increasing PSFCH symbol index to a PSFCH symbol of the multiple PSFCH symbols in a decreasing order in the PSFCH period. A first PSFCH symbol of the multiple PSFCH symbols is located at symbol twelve as a second-to-last symbol of a slot that comprises fourteen symbols. A first PSFCH symbol of the multiple PSFCH symbols is located at a last slot of the PSFCH period. The configuration of the multiple PSFCH symbols maps an increasing PSFCH symbol index to a slot index in an increasing order in the PSFCH period. The configuration of the multiple PSFCH symbols maps an increasing PSFCH symbol index to a PSFCH symbol of the multiple PSFCH symbols in an increasing order in the PSFCH period.

The communications manager 804 and/or other device components may be configured as or otherwise support a means for wireless communication and/or network signaling at a UE, including establishing a configuration of multiple physical sidelink feedback channel (PSFCH) symbols within a PSFCH period; and transmitting PSFCH information based at least in part on the multiple PSFCH symbols within the PSFCH period.

Additionally, wireless communication and/or network signaling at the UE includes any one or combination of: the method further comprising receiving a signaling indicating the configuration of the multiple PSFCH symbols within the PSFCH period to establish the configuration. The method further comprising determining the configuration of the multiple PSFCH symbols within the PSFCH period to establish the configuration. A number of the multiple PSFCH symbols is greater than or equal to one and less than or equal to a number of symbols per slot. A number of the multiple PSFCH symbols is greater than or equal to one and less than or equal to a number of slots per the PSFCH period. A number of the multiple PSFCH symbols is greater than or equal to one and less than or equal to a number of symbols per the PSFCH period. A number of the multiple PSFCH symbols is greater than or equal to two and less than or equal to a number of slots per the PSFCH period. A symbol designated for AGC associated with the PSFCH information is excluded from being attributable to the multiple PSFCH symbols associated with the number of slots in the PSFCH period. The method further comprising receiving a PSSCH transmission; and transmitting the PSFCH information as ACK/NACK feedback responsive to the received PSSCH transmission. The configuration of the multiple PSFCH symbols maps an increasing PSFCH symbol index to a slot index in a decreasing order in the PSFCH period. The configuration of the multiple PSFCH symbols maps an increasing PSFCH symbol index to a PSFCH symbol of the multiple PSFCH symbols in a decreasing order in the PSFCH period. A first PSFCH symbol of the multiple PSFCH symbols is located at symbol twelve as a second-to-last symbol of a slot that comprises fourteen symbols. A first PSFCH symbol of the multiple PSFCH symbols is located at a last slot of the PSFCH period. The configuration of the multiple PSFCH symbols maps an increasing PSFCH symbol index to a slot index in an increasing order in the PSFCH period. The configuration of the multiple PSFCH symbols maps an increasing PSFCH symbol index to a PSFCH symbol of the multiple PSFCH symbols in an increasing order in the PSFCH period.

The processor 806 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 806 may be configured to operate a memory array using a memory controller. In some other implementations, a memory controller may be integrated into the processor 806. The processor 806 may be configured to execute computer-readable instructions stored in a memory (e.g., the memory 808) to cause the device 802 to perform various functions of the present disclosure.

The memory 808 may include random access memory (RAM) and read-only memory (ROM). The memory 808 may store computer-readable, computer-executable code including instructions that, when executed by the processor 806 cause the device 802 to perform various functions described herein. The code may be stored in a non-transitory computer-readable medium such as system memory or another type of memory. In some implementations, the code may not be directly executable by the processor 806 but may cause a computer (e.g., when compiled and executed) to perform functions described herein. In some implementations, the memory 808 may include, among other things, a basic I/O system (BIOS) which may control basic hardware or software operation such as the interaction with peripheral components or devices.

The I/O controller 814 may manage input and output signals for the device 802. The I/O controller 814 may also manage peripherals not integrated into the device 802. In some implementations, the I/O controller 814 may represent a physical connection or port to an external peripheral. In some implementations, the I/O controller 814 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 814 may be implemented as part of a processor, such as the processor 806. In some implementations, a user may interact with the device 802 via the I/O controller 814 or via hardware components controlled by the I/O controller 814.

In some implementations, the device 802 may include a single antenna 816. However, in some other implementations, the device 802 may have more than one antenna 816, which may be capable of concurrently transmitting or receiving multiple wireless transmissions. The receiver 810 and the transmitter 812 may communicate bi-directionally, via the one or more antennas 816, wired, or wireless links as described herein. For example, the receiver 810 and the transmitter 812 may represent a wireless transceiver and may communicate bi-directionally with another wireless transceiver. The transceiver may also include a modem to modulate the packets, to provide the modulated packets to one or more antennas 816 for transmission, and to demodulate packets received from the one or more antennas 816.

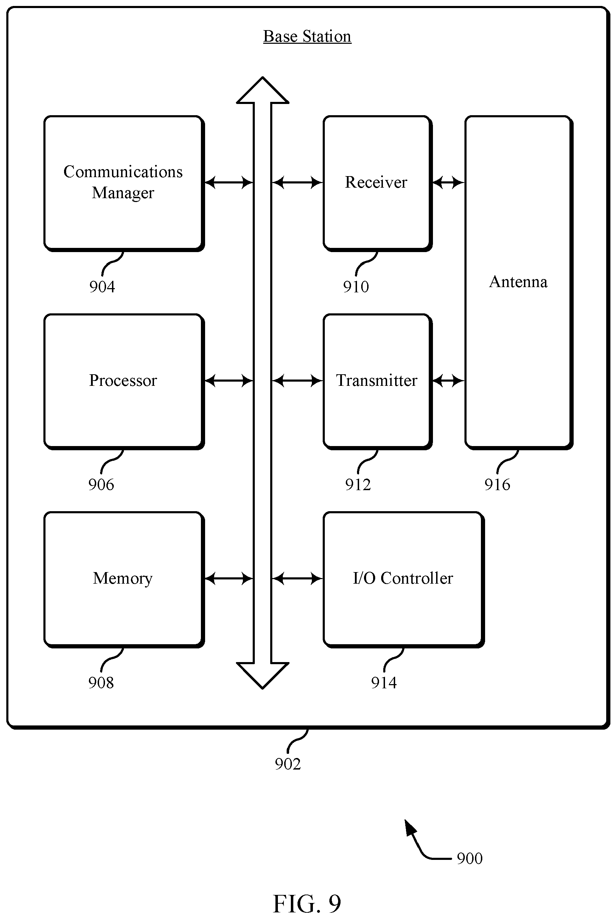

**FIG. 9** illustrates an example of a block diagram 900 of a device 902 that supports PSFCH symbol determination in accordance with aspects of the present disclosure. The device 902 may be an example of a base station 102 as described herein. The device 902 may support wireless communication and/or network signaling with one or more base stations 102, other UEs 104, core network devices and functions (e.g., core network 106), or any combination thereof. The device 902 may include components for bi-directional communications including components for transmitting and receiving communications, such as a communications manager 904, a processor 906, a memory 908, a receiver 910, a transmitter 912, and an I/O controller 914. These components may be in electronic communication or otherwise coupled (e.g., operatively, communicatively, functionally, electronically, electrically) via one or more interfaces (e.g., buses).

The communications manager 904, the receiver 910, the transmitter 912, or various combinations thereof or various components thereof may be examples of means for performing various aspects of the present disclosure as described herein. For example, the communications manager 904, the receiver 910, the transmitter 912, or various combinations or components thereof may support a method for performing one or more of the functions described herein.

In some implementations, the communications manager 904, the receiver 910, the transmitter 912, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 906 and the memory 908 coupled with the processor 906 may be configured to perform one or more of the functions described herein (e.g., by executing, by the processor 906, instructions stored in the memory 908).

Additionally or alternatively, in some implementations, the communications manager 904, the receiver 910, the transmitter 912, or various combinations or components thereof may be implemented in code (e.g., as communications management software or firmware) executed by the processor 906. If implemented in code executed by the processor 906, the functions of the communications manager 904, the receiver 910, the transmitter 912, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the communications manager 904 may be configured to perform various operations (e.g., receiving, monitoring, transmitting) using or otherwise in cooperation with the receiver 910, the transmitter 912, or both. For example, the communications manager 904 may receive information from the receiver 910, send information to the transmitter 912, or be integrated in combination with the receiver 910, the transmitter 912, or both to receive information, transmit information, or perform various other operations as described herein. Although the communications manager 904 is illustrated as a separate component, in some implementations, one or more functions described with reference to the communications manager 904 may be supported by or performed by the processor 906, the memory 908, or any combination thereof. For example, the memory 908 may store code, which may include instructions executable by the processor 906 to cause the device 902 to perform various aspects of the present disclosure as described herein, or the processor 906 and the memory 908 may be otherwise configured to perform or support such operations.

For example, the communications manager 904 may support wireless communication and/or network signaling at a device (e.g., the device 902, a base station) in accordance with examples as disclosed herein. The communications manager 904 and/or other device components may be configured as or otherwise support an apparatus, such as a base station, including a transceiver; a processor coupled to the transceiver, the processor and the transceiver configured to cause the apparatus to: transmit, to a user equipment (UE), a signaling indicating a configuration of multiple PSFCH symbols within a PSFCH period; and receive PSFCH information based at least in part on the multiple PSFCH symbols within the PSFCH period.

Additionally, the apparatus (e.g., a base station) includes any one or combination of: a number of the multiple PSFCH symbols is greater than or equal to one and less than or equal to a number of symbols per slot. A number of the multiple PSFCH symbols is greater than or equal to one and less than or equal to a number of slots per the PSFCH period. A number of the multiple PSFCH symbols is greater than or equal to one and less than or equal to a number of symbols per the PSFCH period. A number of the multiple PSFCH symbols is greater than or equal to two and less than or equal to a number of slots per the PSFCH period. A symbol designated for AGC associated with the PSFCH information is excluded from being attributable to the multiple PSFCH symbols associated with the number of slots in the PSFCH period. The apparatus configured to transmit a PSSCH transmission; and receive the PSFCH information as ACK/NACK feedback responsive to the PSSCH transmission. The configuration of the multiple PSFCH symbols maps an increasing PSFCH symbol index to a slot index in a decreasing order in the PSFCH period. The configuration of the multiple PSFCH symbols maps an increasing PSFCH symbol index to a PSFCH symbol of the multiple PSFCH symbols in a decreasing order in the PSFCH period. A first PSFCH symbol of the multiple PSFCH symbols is located at symbol twelve as a second-to-last symbol of a slot that comprises fourteen symbols. A first PSFCH symbol of the multiple PSFCH symbols is located at a last slot of the PSFCH period. The configuration of the multiple PSFCH symbols maps an increasing PSFCH symbol index to a slot index in an increasing order in the PSFCH period. The configuration of the multiple PSFCH symbols maps an increasing PSFCH symbol index to a PSFCH symbol of the multiple PSFCH symbols in an increasing order in the PSFCH period.

The communications manager 904 and/or other device components may be configured as or otherwise support a means for wireless communication and/or network signaling at a base station, including transmitting, to a UE, a signaling indicating a configuration of multiple PSFCH symbols within a PSFCH period; and receiving PSFCH information based at least in part on the multiple PSFCH symbols within the PSFCH period.

Additionally, wireless communication at the base station includes any one or combination of: a number of the multiple PSFCH symbols is greater than or equal to one and less than or equal to a number of symbols per slot. A number of the multiple PSFCH symbols is greater than or equal to one and less than or equal to a number of slots per the PSFCH period. A number of the multiple PSFCH symbols is greater than or equal to one and less than or equal to a number of symbols per the PSFCH period. A number of the multiple PSFCH symbols is greater than or equal to two and less than or equal to a number of slots per the PSFCH period. A symbol designated for AGC associated with the PSFCH information is excluded from being attributable to the multiple PSFCH symbols associated with the number of slots in the PSFCH period. The method further comprising transmitting a PSSCH transmission; and receiving the PSFCH information as ACK/NACK feedback responsive to the PSSCH transmission. The configuration of the multiple PSFCH symbols maps an increasing PSFCH symbol index to a slot index in a decreasing order in the PSFCH period. The configuration of the multiple PSFCH symbols maps an increasing PSFCH symbol index to a PSFCH symbol of the multiple PSFCH symbols in a decreasing order in the PSFCH period. A first PSFCH symbol of the multiple PSFCH symbols is located at symbol twelve as a second-to-last symbol of a slot that comprises fourteen symbols. A first PSFCH symbol of the multiple PSFCH symbols is located at a last slot of the PSFCH period. The configuration of the multiple PSFCH symbols maps an increasing PSFCH symbol index to a slot index in an increasing order in the PSFCH period. The configuration of the multiple PSFCH symbols maps an increasing PSFCH symbol index to a PSFCH symbol of the multiple PSFCH symbols in an increasing order in the PSFCH period.

The processor 906 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 906 may be configured to operate a memory array using a memory controller. In some other implementations, a memory controller may be integrated into the processor 906. The processor 906 may be configured to execute computer-readable instructions stored in a memory (e.g., the memory 908) to cause the device 902 to perform various functions of the present disclosure.

The memory 908 may include random access memory (RAM) and read-only memory (ROM). The memory 908 may store computer-readable, computer-executable code including instructions that, when executed by the processor 906 cause the device 902 to perform various functions described herein. The code may be stored in a non-transitory computer-readable medium such as system memory or another type of memory. In some implementations, the code may not be directly executable by the processor 906 but may cause a computer (e.g., when compiled and executed) to perform functions described herein. In some implementations, the memory 908 may include, among other things, a basic I/O system (BIOS) which may control basic hardware or software operation such as the interaction with peripheral components or devices.

The I/O controller 914 may manage input and output signals for the device 902. The I/O controller 914 may also manage peripherals not integrated into the device 902. In some implementations, the I/O controller 914 may represent a physical connection or port to an external peripheral. In some implementations, the I/O controller 914 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 914 may be implemented as part of a processor, such as the processor 906. In some implementations, a user may interact with the device 902 via the I/O controller 914 or via hardware components controlled by the I/O controller 914.

In some implementations, the device 902 may include a single antenna 916. However, in some other implementations, the device 902 may have more than one antenna 916, which may be capable of concurrently transmitting or receiving multiple wireless transmissions. The receiver 910 and the transmitter 912 may communicate bi-directionally, via the one or more antennas 916, wired, or wireless links as described herein. For example, the receiver 910 and the transmitter 912 may represent a wireless transceiver and may communicate bi-directionally with another wireless transceiver. The transceiver may also include a modem to modulate the packets, to provide the modulated packets to one or more antennas 916 for transmission, and to demodulate packets received from the one or more antennas 916.

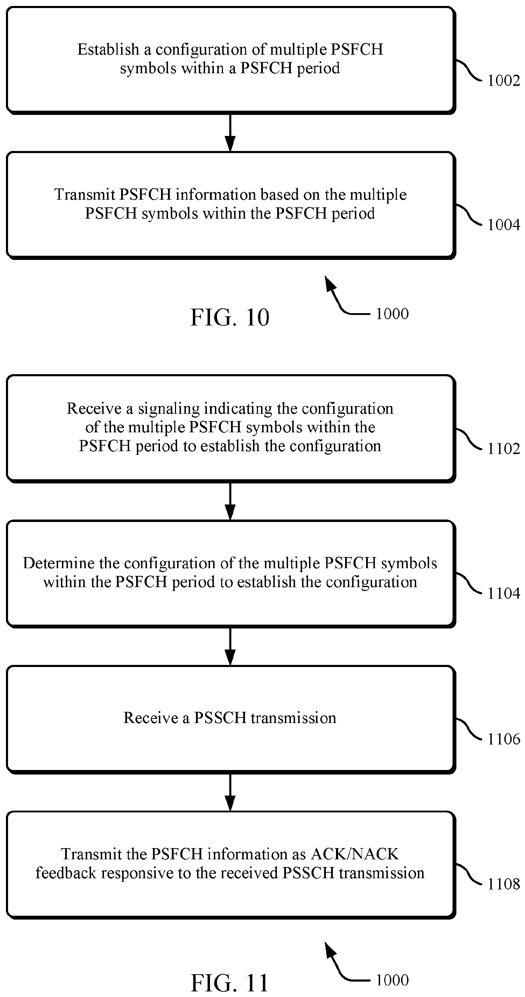

**FIG. 10** illustrates a flowchart of a method 1000 that supports PSFCH symbol determination in accordance with aspects of the present disclosure. The operations of the method 1000 may be implemented and performed by a device or its components, such as a UE 104 as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1002, the method may include establishing a configuration of multiple PSFCH symbols within a PSFCH period. The operations of 1002 may be performed in accordance with examples as described herein. In some implementations, aspects of the operations of 1002 may be performed by a device as described with reference to FIG. 1.

At 1004, the method may include transmitting PSFCH information based at least in part on the multiple PSFCH symbols within the PSFCH period. The operations of 1004 may be performed in accordance with examples as described herein. In some implementations, aspects of the operations of 1004 may be performed by a device as described with reference to FIG. 1.

**FIG. 11** illustrates a flowchart of a method 1100 that supports PSFCH symbol determination in accordance with aspects of the present disclosure. The operations of the method 1100 may be implemented and performed by a device or its components, such as a UE 104 as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1102, the method may include receiving a signaling indicating the configuration of the multiple PSFCH symbols within the PSFCH period to establish the configuration. The operations of 1102 may be performed in accordance with examples as described herein. In some implementations, aspects of the operations of 1102 may be performed by a device as described with reference to FIG. 1.

At 1104, the method may include determining the configuration of the multiple PSFCH symbols within the PSFCH period to establish the configuration. The operations of 1104 may be performed in accordance with examples as described herein. In some implementations, aspects of the operations of 1104 may be performed by a device as described with reference to FIG. 1.

At 1106, the method may include receiving a PSSCH transmission. The operations of 1106 may be performed in accordance with examples as described herein. In some implementations, aspects of the operations of 1106 may be performed by a device as described with reference to FIG. 1.

At 1108, the method may include transmitting the PSFCH information as ACK/NACK feedback responsive to the received PSSCH transmission. The operations of 1108 may be performed in accordance with examples as described herein. In some implementations, aspects of the operations of 1108 may be performed by a device as described with reference to FIG. 1.

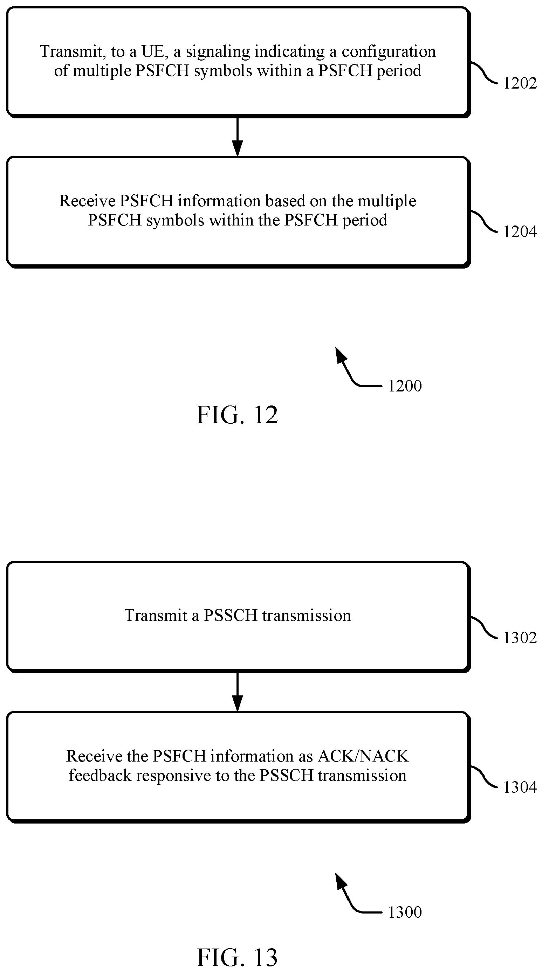

**FIG. 12** illustrates a flowchart of a method 1200 that supports PSFCH symbol determination in accordance with aspects of the present disclosure. The operations of the method 1200 may be implemented and performed by a device or its components, such as a base station 102, as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1202, the method may include transmitting, to a UE, a signaling indicating a configuration of multiple PSFCH symbols within a PSFCH period. The operations of 1202 may be performed in accordance with examples as described herein. In some implementations, aspects of the operations of 1202 may be performed by a device as described with reference to FIG. 1.

At 1204, the method may include receiving PSFCH information based at least in part on the multiple PSFCH symbols within the PSFCH period. The operations of 1204 may be performed in accordance with examples as described herein. In some implementations, aspects of the operations of 1204 may be performed by a device as described with reference to FIG. 1.

**FIG. 13** illustrates a flowchart of a method 1300 that supports PSFCH symbol determination in accordance with aspects of the present disclosure. The operations of the method 1300 may be implemented and performed by a device or its components, such as a base station 102 as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1302, the method may include transmitting a PSSCH transmission. The operations of 1302 may be performed in accordance with examples as described herein. In some implementations, aspects of the operations of 1302 may be performed by a device as described with reference to FIG. 1.

At 1304, the method may include receiving the PSFCH information as ACK/NACK feedback responsive to the PSSCH transmission. The operations of 1304 may be performed in accordance with examples as described herein. In some implementations, aspects of the operations of 1304 may be performed by a device as described with reference to FIG. 1.

It should be noted that The scope of the present invention is defined by the scope of the appended claims.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the Attorney Docket. No. SMM920210297-WO-PCT disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C, or AB or AC or BC, or ABC (i.e., A and B and C). Similarly, a list of one or more of A, B, or C means A or B or C, or AB or AC or BC, or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on." Further, as used herein, including in the claims, a "set" may include one or more elements.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. The scope of the present invention is defined by the scope of the appended claims.

## Claims

1. A User Equipment, UE, (802), comprising:
a transceiver (810, 812);
a processor (806) coupled to the transceiver (810, 812), the processor (806) and the transceiver (810, 812) configured to cause the UE (802) to:
establish a configuration of multiple physical sidelink feedback channel, PSFCH, symbols within a PSFCH period; and
transmit PSFCH information based at least in part on the multiple PSFCH symbols within the PSFCH period, wherein a number of the multiple PSFCH symbols is greater than one and less than or equal to a number of slots per the PSFCH period,
wherein the multiple PSFCH symbols are included in different slots.

2. The UE (802) of claim 1, wherein to establish the configuration, the processor (806) and the transceiver (810, 812) are configured to cause the UE (802) to receive a signaling indicating the configuration of the multiple PSFCH symbols within the PSFCH period.

3. The UE (802) of claim 1, wherein to establish the configuration, the processor (806) is configured to cause the UE (802) to determine the configuration of the multiple PSFCH symbols within the PSFCH period.

4. The UE (802) of claim 1, wherein:
the number of the multiple PSFCH symbols is greater than two and less than or equal to a number of slots per the PSFCH period, and optionally, wherein a symbol designated for automatic gain control, AGC, associated with the PSFCH information is excluded from being attributable to the multiple PSFCH symbols associated with the number of slots in the PSFCH period.

5. The UE (802) of claim 1, wherein (i) the processor (806) and the transceiver (810, 812) are configured to cause the UE (802) to:
receive a physical sidelink shared channel, PSSCH, transmission; and
transmit the PSFCH information as ACK/NACK feedback responsive to the received PSSCH transmission, or
wherein (ii) the configuration of the multiple PSFCH symbols maps an increasing PSFCH symbol index to a slot index in a decreasing order in the PSFCH period.

6. The UE (802) of claim 1, wherein (i):
the configuration of the multiple PSFCH symbols maps an increasing PSFCH symbol index to a PSFCH symbol of the multiple PSFCH symbols in a decreasing order in the PSFCH period; and
a first PSFCH symbol of the multiple PSFCH symbols is located at least at one of symbol twelve as a second-to-last symbol of a slot that comprises fourteen symbols, or a last slot of the PSFCH period, or
(ii) wherein the configuration of the multiple PSFCH symbols maps an increasing PSFCH symbol index to at least one of a slot index in an increasing order in the PSFCH period, or a PSFCH symbol of the multiple PSFCH symbols in the increasing order in the PSFCH period.

7. An apparatus (902), comprising:
a transceiver (910, 912);
a processor (906) coupled to the transceiver (910, 912), the processor (906) and the transceiver (910, 912) configured to cause the apparatus (902) to:
transmit, to a user equipment, UE (802), a signaling indicating a configuration of multiple PSFCH symbols within a PSFCH period; and
receive PSFCH information based at least in part on the multiple PSFCH symbols within the PSFCH period,
wherein a number of the multiple PSFCH symbols is greater than one and less than or equal to a number of slots per the PSFCH period,
wherein the multiple PSFCH symbols are included in different slots.

8. The apparatus of claim 7, wherein:
the number of the multiple PSFCH symbols is greater than two and less than or equal to a number of slots per the PSFCH period.

9. The apparatus (902) of claim 7, wherein the processor (906) and the transceiver (910, 912) are configured to cause the apparatus (902) to:
transmit a physical sidelink shared channel, PSSCH, transmission; and
receive the PSFCH information as ACK/NACK feedback responsive to the PSSCH transmission.

10. The apparatus (902) of claim 7, wherein the configuration of the multiple PSFCH symbols maps an increasing PSFCH symbol index to a slot index in a decreasing order in the PSFCH period.

11. The apparatus (902) of claim 7, wherein the configuration of the multiple PSFCH symbols maps an increasing PSFCH symbol index to at least one of a slot index in an increasing order in the PSFCH period, or a PSFCH symbol of the multiple PSFCH symbols in the increasing order in the PSFCH period.

12. A method, comprising:
establishing a configuration of multiple physical sidelink feedback channel, PSFCH, symbols within a PSFCH period (1002); and
transmitting PSFCH information based at least in part on the multiple PSFCH symbols within the PSFCH period (1004),
wherein a number of the multiple PSFCH symbols is greater than one and less than or equal to a number of slots per the PSFCH period,
wherein the multiple PSFCH symbols are included in different slots.

13. The method of claim 12, further comprising:
receiving a signaling indicating the configuration of the multiple PSFCH symbols within the PSFCH period to establish the configuration (1102), or
determining the configuration of the multiple PSFCH symbols within the PSFCH period to establish the configuration (1104).

14. The method of claim 12, further comprising:
receiving a physical sidelink shared channel, PSSCH, transmission (1106); and
transmitting the PSFCH information as ACK/NACK feedback responsive to the received PSSCH transmission (1108).

15. A method comprising:
transmitting, to a user equipment, UE (802), a signaling indicating a configuration of multiple PSFCH symbols within a PSFCH period; and
receiving PSFCH information based at least in part on the multiple PSFCH symbols within the PSFCH period,
wherein a number of the multiple PSFCH symbols is greater than one and less than or equal to a number of slots per the PSFCH period,
wherein the multiple PSFCH symbols are included in different slots.

## Patentansprüche

1. Benutzergerät, UE, (802), umfassend:
einen Transceiver (810, 812);
einen Prozessor (806), welcher mit dem Transceiver (810, 812) gekoppelt ist, wobei der Prozessor (806) und der Transceiver (810, 812) dazu konfiguriert sind, das UE (802) zu veranlassen:
eine Konfiguration von mehreren physikalischen Sidelink-Feedbackkanal, PSFCH-Symbolen innerhalb einer PSFCH-Periode einzurichten; und
PSFCH-Informationen zu übertragen, welche zumindest teilweise auf den mehreren PSFCH-Symbolen innerhalb der PSFCH-Periode basieren, wobei die Anzahl der mehreren PSFCH-Symbole größer als eins und kleiner oder gleich einer Anzahl von Zeitschlitzen pro PSFCH-Periode ist,
wobei die mehreren PSFCH-Symbole in unterschiedlichen Zeitschlitzen beinhaltet sind.

2. UE (802) nach Anspruch 1, wobei der Prozessor (806) und der Transceiver (810, 812) zum Einrichten der Konfiguration dazu konfiguriert sind, das UE (802) zu veranlassen, ein Signal zu empfangen, welches die Konfiguration der mehreren PSFCH-Symbole innerhalb der PSFCH-Periode angibt.

3. UE (802) nach Anspruch 1, wobei der Prozessor (806) zum Einrichten der Konfiguration dazu konfiguriert ist, das UE (802) zu veranlassen, die Konfiguration der mehreren PSFCH-Symbole innerhalb der PSFCH-Periode zu bestimmen.

4. UE (802) nach Anspruch 1, wobei:
die Anzahl der mehreren PSFCH-Symbole größer als zwei und kleiner oder gleich einer Anzahl von Zeitschlitzen pro PSFCH-Periode ist, und optional, wobei ein für automatische Verstärkungsregelung, AGC, vorgesehenes Symbol, welches mit den PSFCH-Informationen verknüpft ist, von der Zuordnung zu den mehreren PSFCH-Symbolen ausgenommen ist, welche mit der Anzahl der Zeitschlitze in der PSFCH-Periode verknüpft sind.

5. UE (802) nach Anspruch 1, wobei (i) der Prozessor (806) und der Transceiver (810, 812) dazu konfiguriert sind, das UE (802) zu veranlassen:
eine Übertragung eines geteilten physikalischen Sidelink-Steuerkanals, PSSCH, zu empfangen; und
die PSFCH-Informationen als ACK/NACK-Feedback als Reaktion auf die empfangene PSSCH-Übertragung zu übertragen, oder
wobei (ii) die Konfiguration der mehreren PSFCH-Symbole einen steigenden PSFCH-Symbolindex einem Zeitschlitzindex in absteigender Reihenfolge in der PSFCH-Periode zuordnet.

6. UE (802) nach Anspruch 1, wobei (i):
die Konfiguration der mehreren PSFCH-Symbole einen steigenden PSFCH-Symbolindex einem PSFCH-Symbol der mehreren PSFCH-Symbole in absteigender Reihenfolge in der PSFCH-Periode zuordnet; und
ein erstes PSFCH-Symbol der mehreren PSFCH-Symbole sich zumindest an einem von Symbol zwölf als vorletztes Symbol eines Zeitschlitzes, welcher vierzehn Symbole umfasst, oder einem letzten Zeitschlitz der PSFCH-Periode befindet, oder
(ii) wobei die Konfiguration der mehreren PSFCH-Symbole einen steigenden PSFCH-Symbolindex zumindest einem Zeitschlitzindex in aufsteigender Reihenfolge in der PSFCH-Periode oder einem PSFCH-Symbol der mehreren PSFCH-Symbole in aufsteigender Reihenfolge in der PSFCH-Periode zuordnet.

7. Einrichtung (902), umfassend:
einen Transceiver (910, 912);
einen Prozessor (906), welcher mit dem Transceiver (910, 912) gekoppelt ist, wobei der Prozessor (906) und der Transceiver (910, 912) dazu konfiguriert sind, die Einrichtung (902) zu veranlassen:
ein Signal, welches eine Konfiguration von mehreren PSFCH-Symbolen innerhalb einer PSFCH-Periode angibt, an ein Benutzergerät, UE, (802) zu übertragen; und
PSFCH-Informationen zu empfangen, welche zumindest teilweise auf den mehreren PSFCH-Symbolen innerhalb der PSFCH-Periode basieren,
wobei eine Anzahl der mehreren PSFCH-Symbole größer als eins und kleiner oder gleich einer Anzahl von Zeitschlitzen pro PSFCH-Periode ist,
wobei die mehreren PSFCH-Symbole in unterschiedlichen Zeitschlitzen beinhaltet sind.

8. Einrichtung nach Anspruch 7, wobei:
die Anzahl der mehreren PSFCH-Symbole größer als zwei und kleiner oder gleich einer Anzahl von Zeitschlitzen pro PSFCH-Periode ist.

9. Einrichtung (902) nach Anspruch 7, wobei der Prozessor (906) und der Transceiver (910, 912) dazu konfiguriert sind, die Einrichtung (902) zu veranlassen:
eine Übertragung eines geteilten physikalischen Sidelink-Steuerkanals, PSSCH, zu übertragen; und
die PSFCH-Informationen als ACK/NACK Feedback als Reaktion auf die PSSCH-Übertragung zu empfangen.

10. Einrichtung (902) nach Anspruch 7, wobei die Konfiguration der mehreren PSFCH-Symbole einen steigenden PSFCH-Symbolindex einem Zeitschlitzindex in absteigender Reihenfolge in der PSFCH-Periode zuordnet.

11. Einrichtung (902) nach Anspruch 7, wobei die Konfiguration der mehreren PSFCH-Symbole einen steigenden PSFCH-Symbolindex zumindest einem Zeitschlitzindex in aufsteigender Reihenfolge in der PSFCH-Periode oder einem PSFCH-Symbol der mehreren PSFCH-Symbole in aufsteigender Reihenfolge in der PSFCH-Periode zuordnet.

12. Verfahren, umfassend:
Einrichten einer Konfiguration von mehreren physikalischen Sidelink-Feedbackkanal, PSFCH-Symbolen innerhalb einer PSFCH-Periode (1002); und
Übertragen von PSFCH-Informationen, welche zumindest teilweise auf den mehreren PSFCH-Symbolen innerhalb der PSFCH-Periode basieren (1004),
wobei eine Anzahl der mehreren PSFCH-Symbole größer als eins und kleiner oder gleich einer Anzahl von Zeitschlitzen pro PSFCH-Periode ist,
wobei die mehreren PSFCH-Symbole in unterschiedlichen Zeitschlitzen beinhaltet sind.

13. Verfahren nach Anspruch 12, weiter umfassend:
Empfangen eines Signals, welches die Konfiguration der mehreren PSFCH-Symbole innerhalb der PSFCH-Periode angibt, um die Konfiguration einzurichten (1102), oder
Bestimmen der Konfiguration der mehreren PSFCH-Symbole innerhalb der PSFCH-Periode, um die Konfiguration einzurichten (1104).

14. Verfahren nach Anspruch 12, weiter umfassend:
Empfangen einer Übertragung eines geteilten physikalischen Sidelink-Steuerkanals, PSSCH, (1106); und
Übertragen der PSFCH-Informationen als ACK/NACK Feedback als Reaktion auf die empfangene PSSCH-Übertragung (1108).

15. Verfahren, umfassend:
Übertragen eines Signals, welches eine Konfiguration von mehreren PSFCH-Symbolen innerhalb einer PSFCH-Periode angibt, an ein Benutzergerät, UE, (802); und
Empfangen von PSFCH-Informationen, welche zumindest teilweise auf den mehreren PSFCH-Symbolen innerhalb der PSFCH-Periode basieren,
wobei eine Anzahl der mehreren PSFCH-Symbole größer als eins und kleiner oder gleich einer Anzahl von Zeitschlitzen pro PSFCH-Periode ist,
wobei die mehreren PSFCH-Symbole in unterschiedlichen Zeitschlitzen beinhaltet sind.

## Revendications

1. Équipement utilisateur, UE, (802), comprenant :
un émetteur-récepteur (810, 812) ;
un processeur (806) couplé à l'émetteur-récepteur (810, 812), le processeur (806) et
l'émetteur-récepteur (810, 812) étant configurés pour amener l'UE (802) à :
établir une configuration de plusieurs symboles de canal physique de retour de liaison latérale, PSFCH, au sein d'une période PSFCH ; et
transmettre des informations PSFCH basées au moins en partie sur les multiples symboles PSFCH au sein de la période PSFCH, dans lequel un nombre des multiples symboles PSFCH est supérieur à un et inférieur ou égal à un nombre de créneaux par période PSFCH,
dans lequel les multiples symboles PSFCH sont inclus dans différents créneaux.

2. UE (802) selon la revendication 1, dans lequel, pour établir la configuration, le processeur (806) et l'émetteur-récepteur (810, 812) sont configurés pour amener l'UE (802) à recevoir une signalisation indiquant la configuration des multiples symboles PSFCH au cours de la période PSFCH.

3. UE (802) selon la revendication 1, dans lequel, pour établir la configuration, le processeur (806) est configuré pour amener l'UE (802) à déterminer la configuration des multiples symboles PSFCH au cours de la période PSFCH.

4. UE (802) selon la revendication 1, dans lequel :
le nombre des multiples symboles PSFCH est supérieur à deux et inférieur ou égal à un nombre de créneaux par période PSFCH, et éventuellement, dans lequel un symbole désigné pour la commande automatique du gain, AGC, associé aux informations PSFCH est exclu de l'attribution aux multiples symboles PSFCH associés au nombre de créneaux dans la période PSFCH.

5. UE (802) selon la revendication 1, dans lequel (i) le processeur (806) et l'émetteur-récepteur (810, 812) sont configurés pour amener l'UE (802) à :
recevoir une transmission par canal physique partagé de liaison latérale, PSSCH ; et
transmettre les informations PSFCH en tant que retour ACK/NACK en réponse à la transmission PSSCH reçue, ou
dans lequel (ii) la configuration des multiples symboles PSFCH met en correspondance un index de symbole PSFCH croissant avec un index de créneau dans un ordre décroissant au sein de la période PSFCH.

6. UE (802) selon la revendication 1, dans lequel (i) :
la configuration des multiples symboles PSFCH met en correspondance un index de symbole PSFCH croissant avec un symbole PSFCH des multiples symboles PSFCH , dans un ordre décroissant au cours de la période PSFCH ; et
un premier symbole PSFCH des multiples symboles PSFCH est situé au moins à l'un d'un symbole douze en tant qu'avant-dernier symbole d'un créneau qui comprend quatorze symboles, ou d'un dernier créneau de la période PSFCH, ou
(ii) dans lequel la configuration des multiples symboles PSFCH met en correspondance un index de symbole PSFCH croissant avec au moins l'un d'un index de créneau dans un ordre croissant dans la période PSFCH, ou d'un symbole PSFCH des multiples symboles PSFCH dans l'ordre croissant dans la période PSFCH.

7. Appareil (902), comprenant :
un émetteur-récepteur (910, 912) ;
un processeur (906) couplé à l'émetteur-récepteur (910, 912), le processeur (906) et
l'émetteur-récepteur (910, 912) étant configurés pour amener l'appareil (902) à :
transmettre, à un équipement utilisateur, UE, (802), une signalisation indiquant une configuration de plusieurs symboles PSFCH au sein d'une période PSFCH ; et
recevoir des informations PSFCH basées au moins en partie sur les multiples symboles PSFCH au cours de la période PSFCH,
dans lequel un nombre des multiples symboles PSFCH est supérieur à un et inférieur ou égal à un nombre de créneaux par période PSFCH,
dans lequel les multiples symboles PSFCH sont inclus dans différents créneaux.

8. Appareil selon la revendication 7, dans lequel :
le nombre des multiples symboles PSFCH est supérieur à deux et inférieur ou égal au nombre de créneaux par période PSFCH.

9. Appareil (902) selon la revendication 7, dans lequel le processeur (906) et l'émetteur-récepteur (910, 912) sont configurés pour amener l'appareil (902) à :
transmettre une transmission par canal physique partagé de liaison latérale, PSSCH ; et
recevoir les informations PSFCH en tant que retour ACK/NACK en réponse à la transmission PSSCH.

10. Appareil (902) selon la revendication 7, dans lequel la configuration des multiples symboles PSFCH met en correspondance un index de symbole PSFCH croissant avec un index de créneau dans un ordre décroissant dans la période PSFCH.

11. Appareil (902) selon la revendication 7, dans lequel la configuration des multiples symboles PSFCH met en correspondance un index de symbole PSFCH croissant avec au moins l'un d'un index de créneau dans un ordre croissant dans la période PSFCH, ou d'un symbole PSFCH des multiples symboles PSFCH dans l'ordre croissant dans la période PSFCH.

12. Procédé, comprenant :
l'établissement d'une configuration de plusieurs symboles de canal physique de retour de liaison latérale, PSFCH, au sein d'une période PSFCH (1002) ; et
la transmission d'informations PSFCH basées au moins en partie sur les multiples symboles PSFCH au sein de la période PSFCH (1004),
dans lequel un nombre des multiples symboles PSFCH est supérieur à un et inférieur ou égal à un nombre de créneaux par période PSFCH,
dans lequel les multiples symboles PSFCH sont inclus dans différents créneaux.

13. Procédé selon la revendication 12, comprenant en outre :
la réception d'une signalisation indiquant la configuration des multiples symboles PSFCH au sein de la période PSFCH pour établir la configuration (1102), ou
la détermination de la configuration des multiples symboles PSFCH au sein de la période PSFCH pour établir la configuration (1104).

14. Procédé selon la revendication 12, comprenant en outre :
la réception d'une transmission par canal physique partagé de liaison latérale, PSSCH, (1106) ; et
la transmission des informations PSFCH en tant que retour ACK/NACK en réponse à la transmission PSSCH reçue (1108).

15. Procédé comprenant :
la transmission, à un équipement utilisateur, UE, (802), d'une signalisation indiquant une configuration de plusieurs symboles PSFCH au sein d'une période PSFCH ; et
la réception d'informations PSFCH basées au moins en partie sur les multiples symboles PSFCH au cours de la période PSFCH,
dans lequel un certain des multiples symboles PSFCH est supérieur à un et inférieur ou égal à un nombre de créneaux par période PSFCH,
dans lequel les multiples symboles PSFCH sont inclus dans différents créneaux.
